# EUROPEAN PATENT APPLICATION

(11) **EP 4 799 893 A1**
(43) Date of publication of application: **02.09.2026**
(21) Application number: 26156513.9
(22) Date of filing: 05.02.2026
(51) Int. Cl.: B60W 50/10, B60W 10/08

(54) **VEHICLE CONTROL SYSTEM**

(30) Priority: 27.02.2025 JP 2025029744
(71) Applicant: MAZDA MOTOR CORPORATION, Hiroshima 730-8670 (JP)
(72) Inventor: Hayashi, Shuhei, Aki-gun, Hiroshima, 730-8670 (JP); Kubo, Junichi, Aki-gun, Hiroshima, 730-8670 (JP); Yagi, Atsushi, Aki-gun, Hiroshima, 730-8670 (JP); Iwanaga, Tsutomu, Hiroshima-shi, 734-0026 (JP); Kawakami, Satoshi, Hiroshima-shi, 734-0026 (JP)
(74) Representative: Lorenz Seidler Gossel Part. mbB

(57) **Abstract**

[Problem] To improve a sense of an increase in acceleration while ensuring controllability of acceleration with respect to an accelerator operation in a vehicle control system that controls a drive source on the basis of target acceleration.

[Solution]

A vehicle control system 1 includes: a motor 2 that generates a driving force of a vehicle; an accelerator operation amount sensor 16 that detects an accelerator operation amount; a vehicle speed sensor 18 that detects a vehicle speed; and a controller 20 configured to determine target acceleration at least on the basis of the accelerator operation amount and the vehicle speed and to control the motor 2 to generate the driving force that corresponds to the target acceleration. The controller 20 is configured to determine target jerk on the basis of the target acceleration or actual acceleration of the vehicle at a time point, at which the accelerator operation amount becomes constant, and/or the current vehicle speed, and determine the target acceleration to achieve the target jerk when the accelerator operation amount is constant during acceleration of the vehicle.

## Description

### [Technical Field]

The present invention relates to a vehicle control system that determines target acceleration of a vehicle and controls a drive source on the basis of this target acceleration.

### [Background Art]

This type of the technique is described in Patent Literature 1, for example. Patent Literature 1 discloses a technique of setting target jerk on the basis of a change in an acceleration request that corresponds to an operation state of an accelerator pedal, calculating requested acceleration on the basis of the acceleration request, a vehicle speed, and the target jerk, and operating an internal combustion engine to obtain this requested acceleration. This technique attempts to make a driver feel a sense of an increase in the acceleration.

### [Citation List]

### [Patent Literature]

[Patent Literature 1] JP2009-166717A

### [Summary of Invention]

### [Technical Problem]

Conventionally, target acceleration of the vehicle has been determined mainly on the basis of the vehicle speed and an accelerator operation amount (an operation amount of the accelerator pedal), and a drive source has been controlled on the basis of this target acceleration. More specifically, as the accelerator operation amount is increased, the driver's acceleration request is increased. Thus, the target acceleration having a high value is determined. Meanwhile, as the vehicle speed is increased, the target acceleration having a low value is determined. This is because output of the drive source tends to be reduced with the increase in the vehicle speed (in this case, an increase in a rotational frequency of the drive source) due to a characteristic of the drive source.

In addition, as the vehicle speed is increased, an acceleration gain that indicates a change in the acceleration with respect to a change in the accelerator operation amount at each vehicle speed is reduced relatively significantly. This is done to ensure controllability of the acceleration with respect to an accelerator operation at each vehicle speed. However, in the case where the acceleration gain is set in order to ensure the controllability, just as described, the acceleration is possibly reduced relatively significantly, which possibly impairs the sense of the increase in the acceleration, in other words, possibly gives the driver a sense of stall when the accelerator operation amount becomes constant during the acceleration. This is because the target acceleration is reduced as the vehicle speed is increased. That is, when the accelerator operation amount becomes constant, the accelerator operation amount is fixed, and the target acceleration that corresponds to a magnitude of the vehicle speed is thereby determined. As a result, the target acceleration that is determined according to the vehicle speed becomes relatively low.

Here, in order to improve the sense of the increase in the acceleration during a period in which the accelerator operation amount becomes constant during the acceleration, it is considered to set the relatively high target acceleration, which is determined according to the vehicle speed, that is, to suppress a magnitude of a reduction in the acceleration gain that is associated with the increase in the vehicle speed. However, in this case, the change in the target acceleration becomes excessively significant with respect to the change in the accelerator operation amount at each vehicle speed, that is, the change in the acceleration becomes hypersensitive with respect to the accelerator operation amount, and the controllability of the acceleration with respect to the accelerator operation is no longer ensured. From the above, it can be said that it is difficult to simultaneously achieve the controllability of the acceleration with respect to the accelerator operation and the sense of the increase in the acceleration during the period in which the accelerator operation amount becomes constant during the acceleration.

The invention has been made to solve the above-described problems of the related art, and an object thereof is to improve a sense of an increase in acceleration while ensuring controllability of acceleration with respect to an accelerator operation in a vehicle control system that controls a drive source on the basis of target acceleration.

### [Solution to Problem]

In order to achieve the above object, the invention is a vehicle control system that includes: a drive source that generates a driving force of a vehicle; an accelerator operation amount sensor that detects an accelerator operation amount as an operation amount of an accelerator pedal of the vehicle; a vehicle speed sensor that detects a vehicle speed of the vehicle; and a controller that determines target acceleration at least on the basis of the accelerator operation amount and the vehicle speed, and controls the drive source to generate the driving force that corresponds to the target acceleration, in which the controller is configured to: determine, when the accelerator operation amount is constant during acceleration of the vehicle, a target jerk on the basis of the target acceleration or actual acceleration of the vehicle at a time point at which the accelerator operation amount becomes constant, and determine the target acceleration to achieve the target jerk.
In an embodiment, the controller is configured to determine the target jerk such that the value of the target jerk increases with an increase in the value of the target acceleration or the actual acceleration at the time point at which the accelerator operation amount becomes constant. In other words, the controller is configured such that the target jerk has a positive monotonic relationship to the target acceleration or the actual acceleration at the time point at which the accelerator operation amount becomes constant.

In the thus-configured invention, the controller determines the target acceleration basically on the basis of the accelerator operation amount and the vehicle speed. However, in the case where the accelerator operation amount is constant during the acceleration of the vehicle, it determines the target jerk on the basis of the target acceleration or the actual acceleration at the time point, at which the accelerator operation amount becomes constant, instead of using such target acceleration, and determines the target acceleration to achieve the target jerk. In this way, it is possible to improve a sense of an increase in the acceleration during a period, in which the accelerator operation amount becomes constant during the acceleration, while ensuring controllability of the acceleration with respect to the accelerator operation.

In particular, in the embodiment of the invention, the controller determines the target jerk having a higher value as the target acceleration or the actual acceleration at the time point, at which the accelerator operation amount becomes constant, is higher and having a lower value as the target acceleration or the actual acceleration at the time point, at which the accelerator operation amount becomes constant, is lower. As a result, in the case where the target acceleration at the time point, at which the accelerator operation amount becomes constant, is high, it is assumed that a driver has a clear intention to accelerate, and a reduction in the target acceleration can be suppressed by using the relatively high target jerk. Therefore, it is possible to effectively improve the sense of the increase in the acceleration when the accelerator operation amount is constant.

Another aspect of the invention is a vehicle control system that includes: a drive source that generates a driving force of a vehicle; an accelerator operation amount sensor that detects an accelerator operation amount as an operation amount of an accelerator pedal of the vehicle; a vehicle speed sensor that detects a vehicle speed of the vehicle; and a controller that determines target acceleration at least on the basis of the accelerator operation amount and the vehicle speed, and controls the drive source to generate the driving force that corresponds to the target acceleration, in which the controller is configured to: determine, when the accelerator operation amount is constant during acceleration of the vehicle, a target jerk on the basis of the current vehicle speed, and determine the target acceleration to achieve the target jerk.
According to an embodiment, the controller is configured to determine the target jerk such that the value of the target jerk increases with an increase in the value of the current vehicle speed. In other words, the controller is configured such that the target jerk has a positive monotonic relationship to the current vehicle speed.

Also, according to the thus-configured invention, it is possible to improve the sense of the increase in the acceleration during the period, in which the accelerator operation amount becomes constant during the acceleration, while ensuring the controllability of the acceleration with respect to the accelerator operation.
In particular, in the embodiment of the invention, the controller determines the target jerk having a higher value as the current vehicle speed is higher, and having a lower value as the current vehicle speed is lower. As a result, in the case where the vehicle speed during the period, in which the accelerator operation amount is constant, is high, the driver depresses the accelerator pedal. Thus, it is assumed that the sense of the increase in the acceleration is required, and the reduction in the target acceleration can be suppressed by using the relatively high target jerk. Therefore, it is possible to effectively improve the sense of the increase in the acceleration when the accelerator operation amount is constant.

The further another aspect of the invention is a vehicle control system that includes: a drive source that generates a driving force of a vehicle; an accelerator operation amount sensor that detects an accelerator operation amount as an operation amount of an accelerator pedal of the vehicle; a vehicle speed sensor that detects a vehicle speed of the vehicle; and a controller that determines target acceleration at least on the basis of the accelerator operation amount and the vehicle speed, and controls the drive source to generate the driving force that corresponds to the target acceleration, in which the controller, when the accelerator operation amount is constant during acceleration of the vehicle, determines target jerk on the basis of the target acceleration or actual acceleration of the vehicle at a time point, at which the accelerator operation amount becomes constant, and the current vehicle speed, and determines the target acceleration to achieve the target jerk.

Also, according to the thus-configured invention, it is possible to improve the sense of the increase in the acceleration while ensuring the controllability of the acceleration with respect to the accelerator operation.

In the invention, preferably, the controller is configured to determine jerk having a negative value as the target jerk.

According to the thus-configured invention, in the case where the accelerator operation amount is constant during the acceleration of the vehicle, it is possible to control a magnitude of a reduction (a change rate at the time of the reduction) in the target acceleration by using the target jerk having a negative value.

In the invention, preferably, the controller is configured to determine, when the accelerator operation amount is not constant during the acceleration of the vehicle, the target acceleration such that the value of the target acceleration increases with an increase of value of the accelerator operation amount and/or decreases with an increase in the value of the vehicle speed. In other words, the controller is configured such that, when the accelerator operation amount is not constant during the acceleration of the vehicle, the target acceleration has a positive monotonic relationship to the accelerator operation amount and/or a negative monotonic relationship to the vehicle speed. According to the thus-configured invention, when the accelerator operation amount is changed, it is possible to determine the accurate target acceleration that corresponds to the accelerator operation amount and the vehicle speed.

In the invention, preferably, the controller is configured to determine the target jerk on the basis of a change speed of the accelerator operation amount, and correct the target acceleration on the basis of the target jerk when the accelerator operation amount is not constant during the acceleration of the vehicle.

According to the thus-configured invention, when the accelerator operation amount is changed, it is possible to smoothly change the target acceleration according to the change speed of the accelerator operation amount.

### [Advantageous Effects of Invention]

According to the invention, in the vehicle control system that controls the drive source on the basis of the target acceleration, it is possible to improve the sense of the increase in the acceleration at the time when the accelerator operation amount becomes constant during the acceleration, while ensuring the controllability of the acceleration with respect to the accelerator operation.

### [Brief Description of Drawings]

[FIG. 1] FIG. 1 is a schematic configuration view of a vehicle control system according to an embodiment of the invention.
[FIG. 2] FIG. 2 is a block diagram illustrating an electrical configuration of the vehicle control system according to the embodiment of the invention.
[FIG. 3] FIG. 3 schematically illustrates a target acceleration map according to the embodiment of the invention.
[FIG. 4] FIG. 4 illustrates an example of a relationship between an accelerator operation amount and target acceleration that is defined by the target acceleration map according to the embodiment of the invention.
[FIG. 5] FIG. 5 illustrates an example of a relationship between a vehicle speed and the target acceleration that is defined by the target acceleration map according to the embodiment of the invention.
[FIG. 6] FIG. 6 illustrates two examples of an acceleration gain at each vehicle speed by the target acceleration map according to the embodiment of the invention.
[FIG. 7] FIG. 7 is a time chart of a case where the accelerator operation amount becomes constant during acceleration in the two examples illustrated in FIG. 6.
[FIG. 8] FIG. 8 schematically illustrates a target jerk map according to the embodiment of the invention.
[FIG. 9] FIG. 9 is a chart illustrating the target acceleration that is determined by the target jerk map according to the embodiment of the invention.
[FIG. 10] FIG. 10 is a flowchart illustrating control according to the embodiment of the invention.
[FIG. 11] FIG. 11 is an explanatory chart of correction of the target acceleration that is based on jerk corresponding to an accelerator operation amount change speed according to the embodiment of the invention.
[FIG. 12] FIG. 12 is a time chart illustrating an example of operation and effects of the vehicle control system according to the embodiment of the invention.
[FIG. 13] FIG. 13 is a time chart illustrating another example of operation and effects of the vehicle control system according to the embodiment of the invention.

### [Description of Embodiments]

Hereinafter, a vehicle control system according to an embodiment of the invention will be described with reference to the accompanying drawings.

### <System Configuration>

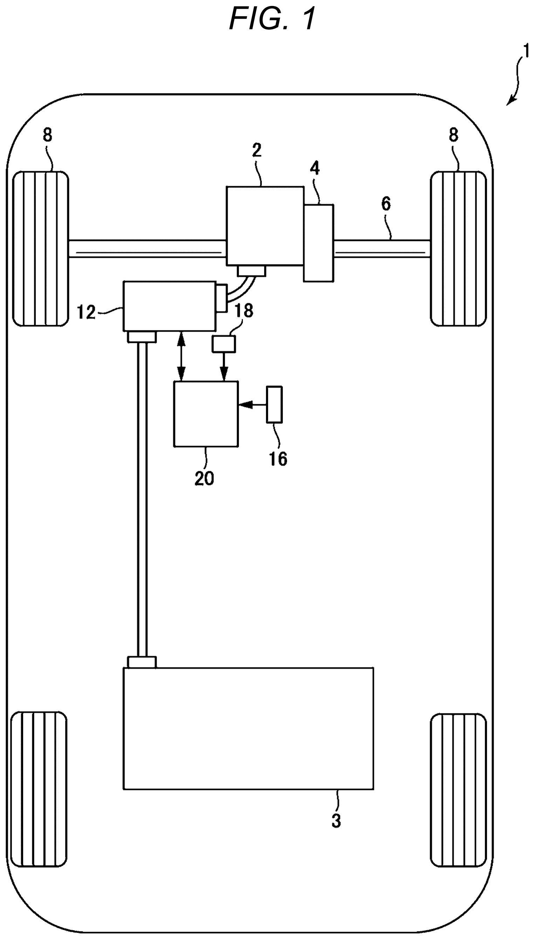

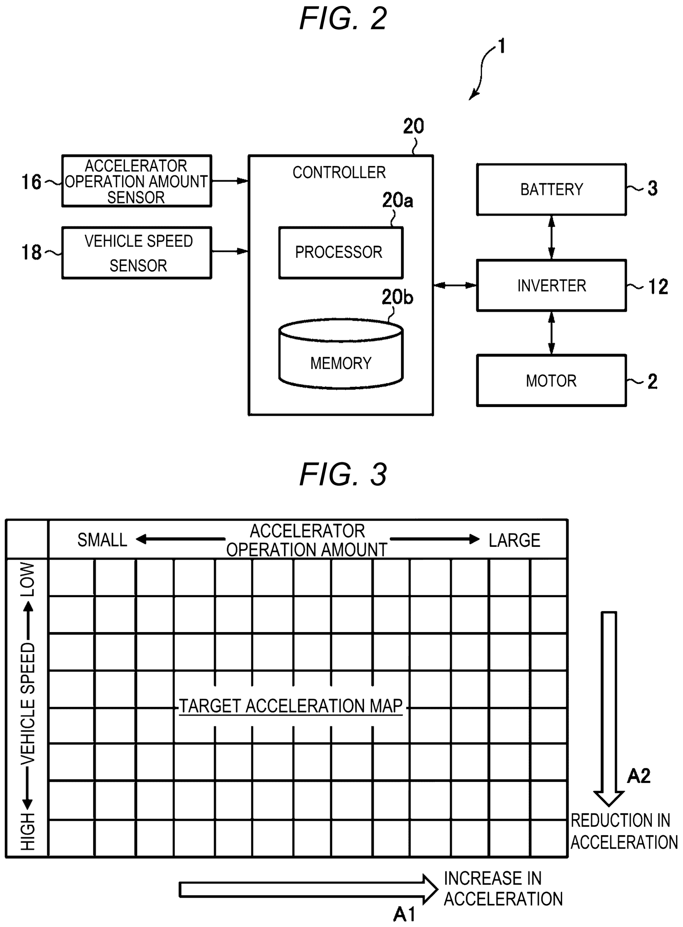

First, a configuration of the vehicle control system according to the present embodiment will be described with reference to FIGs. 1 and 2. FIG. 1 is a configuration view schematically illustrating the vehicle control system according to the present embodiment, and FIG. 2 is a block diagram illustrating an electrical configuration of the vehicle control system according to the present embodiment.

As illustrated in FIG. 1, a vehicle control system 1 mainly includes: a motor 2 as a power source that generates a driving force (torque) for driving a vehicle (an electric vehicle); a battery 3 that supplies electric power to the motor 2; a reduction gear 4 that transmits the driving force of the motor 2 at a predetermined reduction ratio; a driveshaft 6 to which the driving force is transmitted from the reduction gear 4; and wheels (drive wheels) 8 that are driven by the driving force from the driveshaft 6. Instead of applying the motor 2, an internal combustion engine (an engine) or the like may be applied as the drive source of the vehicle.

The vehicle control system 1 also includes: an inverter 12 that is connected to the motor 2; and a controller 20 that is electrically connected to the inverter 12. The inverter 12 converts DC power supplied from the battery 3 into AC power to supply it to the motor 2, and converts regenerative power generated by the motor 2 into the DC power to supply it to the battery 3 and thereby charge the battery 3.

As illustrated in FIG. 2, the controller 20 includes a circuit, and is a well-known microcomputer-based controller. The controller 20 includes: one or more processors 20a as a central processing unit (CPU) that executes a program; memory 20b that includes random access memory (RAM) and read only memory (ROM) to store the program and data; an input-output bus through which an electric signal is input/output; and the like. For example, the controller 20 includes an electronic control unit (ECU) and the like.

The controller 20 receives signals from an accelerator operation amount sensor 16 and a vehicle speed sensor 18, and outputs a control signal for controlling the motor 2 to the inverter 12 on the basis of these signals (FIGs. 1 and 2). The accelerator operation amount sensor 16 detects an accelerator operation amount that is an operation amount of an accelerator pedal by a driver, and the vehicle speed sensor 18 detects a vehicle speed of the vehicle. In the present embodiment, the controller 20 determines target acceleration on the basis of the accelerator operation amount and the vehicle speed that are detected by the accelerator operation amount sensor 16 and the vehicle speed sensor 18, and controls the motor 2 via the inverter 12 to generate the driving force that corresponds to this target acceleration.

### <Contents of Control>

Next, a specific description will be made on contents of control executed by the controller 20 in the present embodiment.

### (Target Acceleration Map)

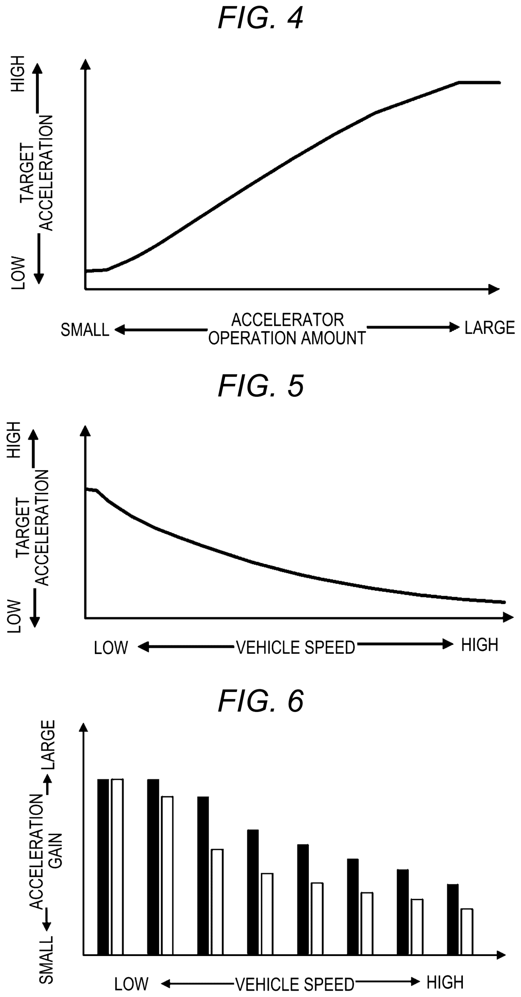

First, a description will be made on contents related to a target acceleration map that is used in the present embodiment with reference to FIGs. 3 to 5. FIG. 3 schematically illustrates a target acceleration map used in the present embodiment, FIG. 4 illustrates an example of a relationship between an accelerator operation amount (a horizontal axis) and target acceleration (a vertical axis) that is defined by the target acceleration map according to the present embodiment, and FIG. 5 illustrates an example of a relationship between the vehicle speed (a horizontal axis) and the target acceleration (a vertical axis) that is defined by the target acceleration map according to the present embodiment.

As illustrated in FIG. 3, the target acceleration map is defined on the basis of the accelerator operation amount (a horizontal direction) and the vehicle speed (a vertical direction). In the present embodiment, the controller 20 stores such a target acceleration map in advance, determines the target acceleration that corresponds to the current accelerator operation amount and the current vehicle speed with reference to the target acceleration map, and controls the motor 2 to achieve this target acceleration.

More specifically, the target acceleration map is defined such that the target acceleration having a high value is determined since the driver's acceleration request is increased as the accelerator operation amount is increased (see an arrow A1 in FIG. 3 and FIG. 4). The target acceleration map is also defined such that the target acceleration having a lower value is determined as the vehicle speed is increased (see an arrow A2 in FIG. 3 and FIG. 5). This is because output of the motor 2 tends to be reduced with an increase in the vehicle speed and an increase in a motor rotational frequency.

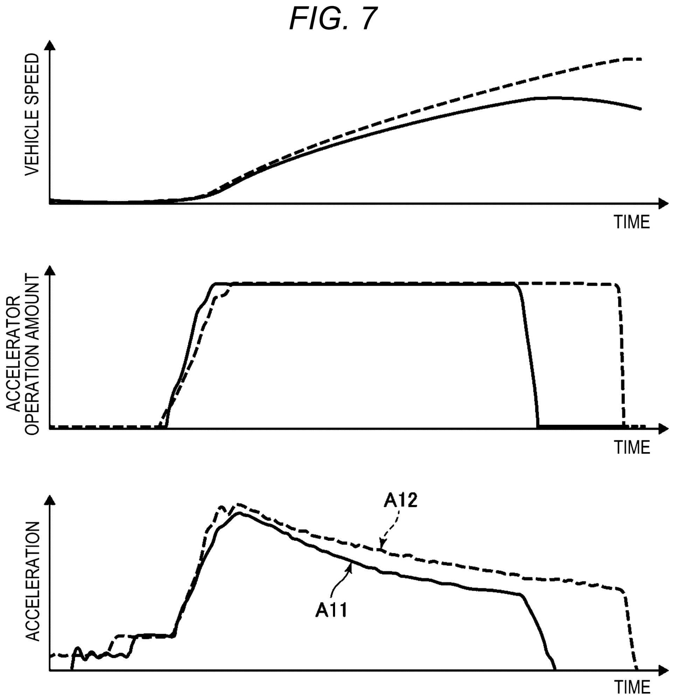

Next, a description will be made on problems of a case of using the target acceleration map as described above with reference to FIGs. 6 and 7. FIG. 6 illustrates an example of an acceleration gain (a value proportional to the acceleration) that indicates a change in the acceleration with respect to a change in the accelerator operation amount at each vehicle speed, the acceleration gain being defined by the target acceleration map described above. In particular, FIG. 6 illustrates the acceleration gain at each vehicle speed in two examples of the target acceleration map (a first example and a second example). The first example is illustrated in a blank bar graph, and the second example is illustrated in a black bar graph. As illustrated in FIG. 6, in the first example, when compared to the second example, the acceleration gain is significantly reduced as the vehicle speed is increased. In other words, in the second example, when compared to the first example, a magnitude of the reduction in the acceleration gain that is associated with the increase in the vehicle speed is suppressed.

FIG. 7 includes time chart examples illustrating the vehicle speed, the accelerator operation amount, and the acceleration (the target acceleration) in an order from the top. Here, a time variation of each parameter in a case where the accelerator operation amount becomes constant during the acceleration is illustrated. In FIG. 7, each solid line indicates a result in the first example of FIG. 6, and each broken line indicates a result in the second example of FIG. 6. According to these results, it is understood that the reduction in the acceleration after the accelerator operation amount becomes constant is more significant in the first example than in the second example. More specifically, in the first example, the acceleration is reduced significantly after the accelerator operation amount becomes constant (an arrow A11). Thus, a sense of the increase in the acceleration is impaired, in other words, the driver is given a sense of stall. Meanwhile, in the second example, the reduction in the acceleration after the accelerator operation amount becomes constant is relatively small (an arrow A12). Thus, the sense of the increase in the acceleration is ensured.

Such a result is obtained since, in the first example, the acceleration gain is reduced significantly with the increase in the vehicle speed (FIG. 6). That is, when the accelerator operation amount becomes constant, the accelerator operation amount is fixed, and the target acceleration that corresponds to the magnitude of the vehicle speed is determined. As a result, in the first example, the target acceleration that is determined according to this vehicle speed becomes relatively low. Meanwhile, in the second example, since the magnitude of the reduction in the acceleration gain that is associated with the vehicle speed is suppressed (FIG. 6), the target acceleration that is determined according to the vehicle speed becomes relatively high.

However, in the second example, a change in the target acceleration becomes excessively significant with respect to the change in the accelerator operation amount at each vehicle speed, that is, the change in the acceleration becomes hypersensitive with respect to the accelerator operation amount, and controllability of the acceleration with respect to the accelerator operation is no longer ensured. On the contrary, in the first example, since the change in the target acceleration with respect to the change in the accelerator operation amount at each vehicle speed is appropriate, the controllability of the acceleration with respect to the accelerator operation is ensured.

From what have been described so far, it can be said that, with the target acceleration map as described above, it is difficult to simultaneously achieve the controllability of the acceleration with respect to the accelerator operation and the sense of the increase in the acceleration during a period in which the accelerator operation amount becomes constant during the acceleration.

### (Target Jerk Map)

In the present embodiment, in order to solve the above-described problem of the target acceleration map, in particular, in order to simultaneously achieve the controllability of the acceleration with respect to the accelerator operation and the sense of the increase in the acceleration during the period in which the accelerator operation amount becomes constant during the acceleration, the target acceleration is determined by using a target jerk map that is defined separately from the target acceleration map.

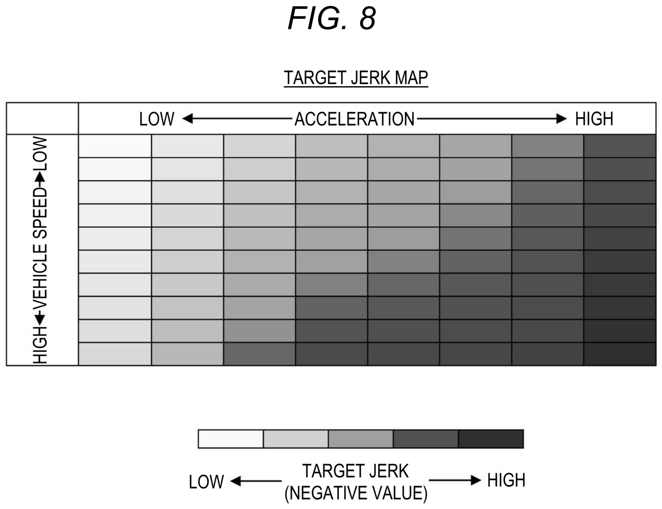

FIG. 8 schematically illustrates the target jerk map that is used in the present embodiment. The target jerk map is defined on the basis of the acceleration (a horizontal direction), more specifically, the target acceleration at a time point at which the accelerator operation amount becomes constant, and the vehicle speed (a vertical direction), more specifically, the current vehicle speed. In the present embodiment, the controller 20 stores such a target jerk map in advance, and, when the accelerator operation amount is constant during the acceleration of the vehicle, determines target jerk on the basis of the target acceleration (this target acceleration is used continuously) at the time point, at which the accelerator operation amount becomes constant, and the current vehicle speed that is changed over time with reference to the target jerk map, and determines the target acceleration to achieve this target jerk.

More specifically, in the target jerk map, the target jerk having a negative value is defined. This is because, when the accelerator operation amount becomes constant during the acceleration, the acceleration is basically changed in a reduced direction, that is, a change rate of the acceleration (the jerk) becomes negative.

The target jerk map is also defined such that the target jerk having a higher value (in other words, a negative value closer to 0) is determined with the increase in the target acceleration at the time point at which the accelerator operation amount becomes constant. In this way, in the case where the target acceleration at the time point at which the accelerator operation amount becomes constant is high, the relatively high target acceleration is determined, and thus the reduction in the target acceleration is suppressed. This is because, when the target acceleration at the time point at which the accelerator operation amount becomes constant is high, the driver has a clear intention to accelerate, and thus, it can be said that the increase in the acceleration is required.

In addition, the target jerk map is defined such that the target jerk having the higher value (in other words, a negative value closer to 0) is determined as the current vehicle speed is increased. In this way, when the current vehicle speed is high, the relatively high target acceleration is determined, and the reduction in the target acceleration is suppressed. This is because the driver depresses the accelerator pedal more when the current vehicle speed is high than when the current vehicle speed is low, and thus, it can be said that the sense of the increase in the acceleration is required.

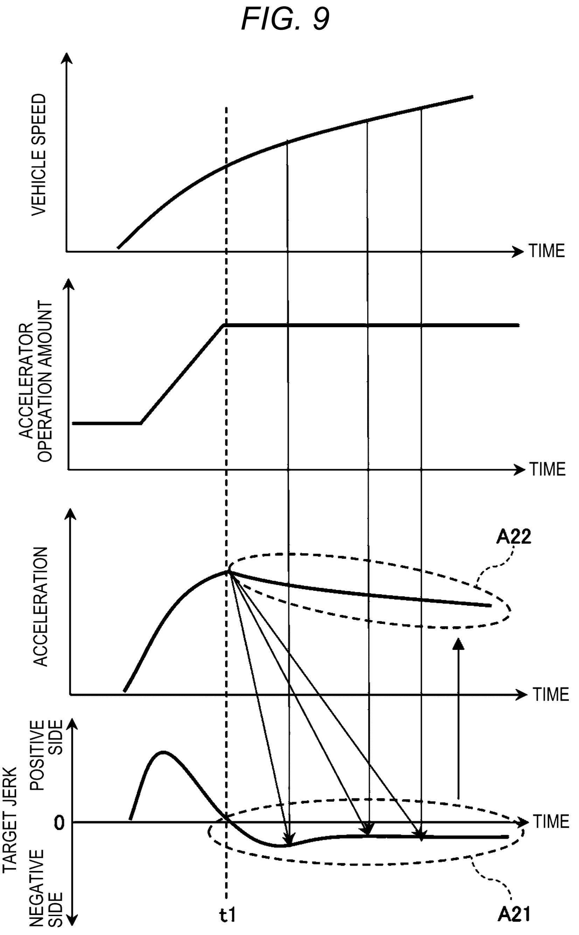

Next, a specific description will be made on the target acceleration that is determined by the target jerk map described above with reference to FIG. 9. FIG. 9 includes time chart examples illustrating the vehicle speed, the accelerator operation amount, the acceleration (the target acceleration), and the target jerk in an order from the top. First, at time t1, the accelerator operation amount becomes constant during the acceleration. The controller 20 determines the target acceleration from the target acceleration map on the basis of the current accelerator operation amount and the current vehicle speed in a period until the time t1, in which the accelerator operation amount is changed, then determines the target jerk from the target jerk map on the basis of the target acceleration and the current vehicle speed at the time point, at which the accelerator operation amount becomes constant, and the target acceleration on the basis of this target jerk at time t1, at which the accelerator operation amount becomes constant, onward.

More specifically, as indicated by arrows in FIG. 9, the controller 20 sequentially determines the target jerk from the target jerk map on the basis of the target acceleration at the time t1 and the vehicle speed that is changed over time (see a reference sign A21). Then, from the target jerk that is sequentially determined, just as described, the controller 20 determines the target acceleration to achieve this target jerk (see a reference sign A22). For example, the controller 20 repeatedly calculates the target jerk and the target acceleration at predetermined intervals, and applies (adds) the target jerk (a negative value) determined this time to the target acceleration determined last time, to determine the target acceleration of this time.

Here, the target jerk, which is defined in the target jerk map, is set in a manner to give predictability to a change in the jerk at the time of the constant acceleration of the accelerator. That is, the target jerk is set such that the driver can predict the change in the jerk in order to recognize a time until the target and hold his/her body against an inertial force that is generated to the vehicle. In this case, a so-called Tau theory that is defined by "τ(x) = x/x'" as a scalar quantity having a time unit is used "'" represents a derivative. The same will be applied below). The Tau theory is a theory based on an idea that a human being perceives the world as a prediction time (τ) until a gap with the target becomes zero and controls him/herself. In the present embodiment, it is considered to control the action to keep "τ'(x)" constant when the gap is made to zero. This is based on the assumption that "τ'(x) = C = 1 - (xx"/x'²)" is constant (C is a constant), and this expression is expressed as "x" = (1 - C) (x'²/x)". For example, the change in the jerk is minimized when "τ'(x) = -0.5". In the embodiment described above, the target jerk is determined from the target jerk map, which is stored in advance. However, in another example, instead of using the target jerk map, the target jerk may be determined by calculating the mathematical expression as described herein.

In the embodiment described above, the target jerk is determined on the basis of the target acceleration at the time point at which the accelerator operation amount becomes constant. However, the target jerk may be determined on the basis of the actual acceleration (uniquely corresponding to the target acceleration) of the vehicle at the time at which the accelerator operation amount becomes constant instead of the target acceleration.

### (Flowchart)

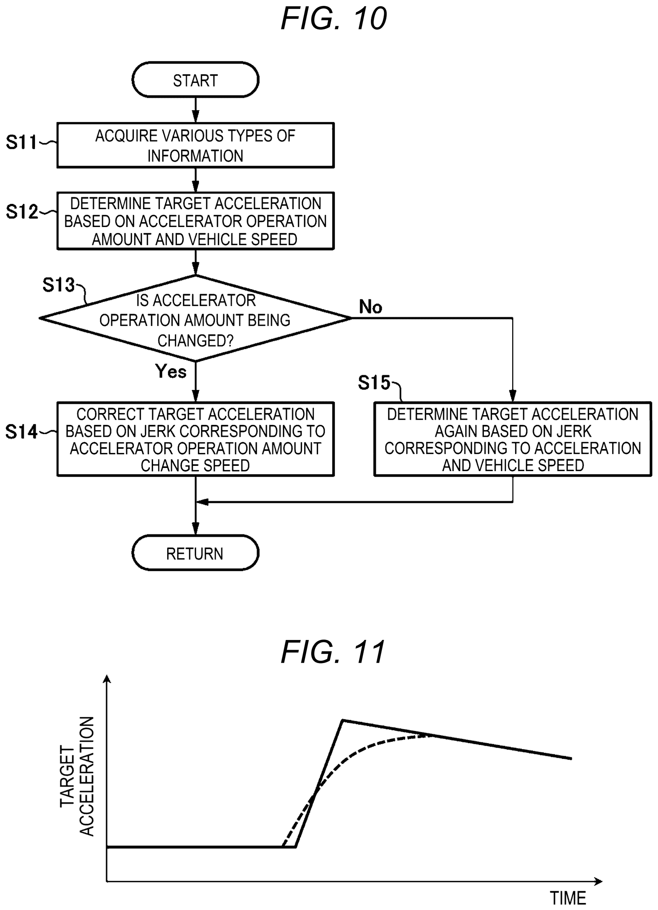

Next, a description will be made on a flowchart illustrating the control according to the present embodiment with reference to FIG. 10. This flow is repeatedly executed by the controller 20 in a predetermined cycle. In detail, the processor 20a in the controller 20 reads the program stored in the memory 20b to execute the program, and thereby realizes the control for the flow.

First, in step S11, the controller 20 acquires various types of information in the vehicle control system 1. More specifically, the controller 20 acquires the accelerator operation amount detected by the accelerator operation amount sensor 16 and the vehicle speed detected by the vehicle speed sensor 18.

Next, in step S12, the controller 20 refers to the target acceleration map, which is stored in advance (FIG. 3), and determines the target acceleration that corresponds to the accelerator operation amount and the vehicle speed acquired in step S11.

Next, in step S13, the controller 20 determines whether the accelerator operation amount is being changed. As a result, if the controller 20 determines that the accelerator operation amount is being changed (step S13: Yes), that is, if the accelerator operation amount is not constant, the processing proceeds to step S14.

In step S14, the controller 20 calculates, from the accelerator operation amount, a change speed thereof (an accelerator operation amount change speed), and corrects the target acceleration, which is determined in step S12, on the basis of the jerk corresponding to the accelerator operation amount change speed. Here, a description will be made on correction of the target acceleration that is based on the jerk corresponding to the accelerator operation amount change speed (an accelerator operation speed) with reference to FIG. 11. In FIG. 11, a solid line indicates the target acceleration that is determined in step S12, and a broken line indicates the target acceleration that is corrected on the basis of the jerk. In the present embodiment, the controller 20 determines the jerk to be generated to the vehicle on the basis of the accelerator operation amount change speed, and makes correction to smooth the change in the target acceleration, which is determined in step S12, by using this jerk. In detail, the controller 20 determines the jerk having the higher value as the accelerator operation amount change speed is increased. After correcting the target acceleration in step S14, just as described, the controller 20 controls the motor 2 via the inverter 12 to generate the driving force that corresponds to this target acceleration.

Returning to FIG. 10, in step S13, if the controller 20 does not determine that the accelerator operation amount is being changed (step 13: No), that is, if the accelerator operation amount is constant, the processing proceeds to step S15. In step S15, instead of using the target acceleration that is determined in step S12, the controller 20 determines the target jerk on the basis of the target acceleration at the time point, at which the accelerator operation amount becomes constant, and the current vehicle speed, and determines again such target acceleration that achieves this jerk. More specifically, with reference to the target jerk map stored in advance (FIG. 8), the controller 20 determines the target jerk that corresponds to the target acceleration at the time point, at which the accelerator operation amount becomes constant, and the current vehicle speed. After determining again the target acceleration in step S15, just as described, the controller 20 controls the motor 2 via the inverter 12 to generate the driving force that corresponds to this target acceleration.

### <Operation and Effects>

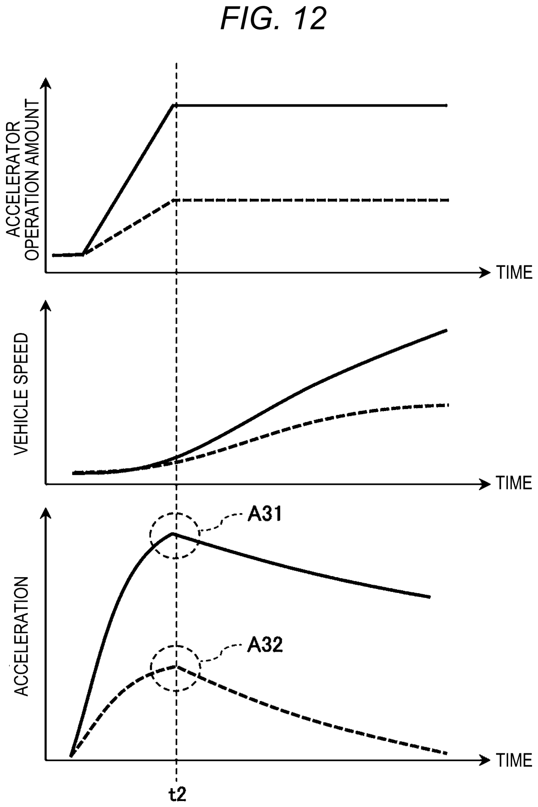

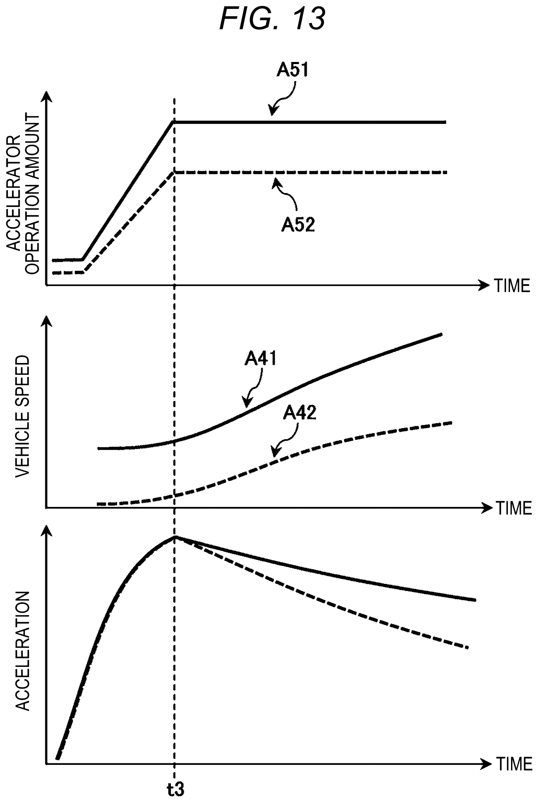

Next, operations and effects of the vehicle control system 1 according to the present embodiment will be described with reference to FIGs. 12 and 13.

FIG. 12 is a time chart illustrating an example of the operation and the effects of the vehicle control system 1 according to the present embodiment. FIG. 12 illustrates time variations of the accelerator operation amount, the vehicle speed, and the acceleration (the target acceleration) when the accelerator operation amount becomes constant during the acceleration in an order from the top. In addition, in FIG. 12, each solid line indicates an example of a case where the target acceleration at a time point t2, at which the accelerator operation amount becomes constant, is relatively high (see a reference sign A31), and each broken line indicates an example of a case where the target acceleration at the time point t2, at which the accelerator operation amount becomes constant, is relatively low (see a reference sign A32). In these examples, it is assumed that the vehicle speed at the time point t2, at which the accelerator operation amount becomes constant, is equal.

As indicated by the solid lines in FIG. 12, according to the present embodiment, in the case where the target acceleration at the time point t2, at which the accelerator operation amount becomes constant, is high (see the reference sign A31), the relatively high target jerk (a negative value close to 0) is determined, and thus the relatively high target acceleration is determined. As a result, when the accelerator operation amount is constant during the acceleration, the reduction in the target acceleration is suppressed, and the sense of the increase in the acceleration is ensured. Just as described, according to the present embodiment, in the case where the target acceleration at the time point t2, at which the accelerator operation amount becomes constant, is relatively high, it is assumed that the driver has the clear intention to accelerate, and the reduction in the target acceleration is suppressed by using the relatively high target jerk. In this way, it is possible to improve the sense of the increase in the acceleration during the period in which the accelerator operation amount is constant.

Meanwhile, as indicated by the broken lines in FIG. 12, according to the present embodiment, in the case where the target acceleration at the time point t2, at which the accelerator operation amount becomes constant, is low (see the reference sign A32), the relatively low target jerk is determined, and thus the relatively low target acceleration is determined. As a result, when the accelerator operation amount is constant during the acceleration, the target acceleration is reduced relatively significantly, and the increase in the acceleration is suppressed. In the case where the target acceleration at the time point t2, at which the accelerator operation amount becomes constant, is low, it is considered that the driver controls an inter-vehicular distance and the vehicle speed in an urban area or the like, and thus it can be said that the sense of the increase in the acceleration is not required much (on the contrary, when the acceleration is excessively increased, it becomes difficult to control the inter-vehicular distance and the vehicle speed). Thus, according to the present embodiment, in the case where the target acceleration at the time point t2, at which the accelerator operation amount becomes constant, is relatively low, it is assumed that the sense of the increase in the acceleration is not required, and thus the target acceleration is reduced by using the relatively low target jerk. In this way, it is possible to suppress the increase in the acceleration when the accelerator operation amount is constant.

Next, FIG. 13 is a time chart illustrating another example of the operation and the effects of the vehicle control system 1 according to the present embodiment. FIG. 13 illustrates the time variations of the accelerator operation amount, the vehicle speed, and the acceleration (the target acceleration) when the accelerator operation amount becomes constant during the acceleration in an order from the top. In addition, in FIG. 13, each solid line indicates an example of a case where the vehicle speed during the period, in which the accelerator operation amount is constant, is relatively high (see a reference sign A41), and each broken line indicates an example of a case where the vehicle speed during the period, in which the accelerator operation amount is constant, is relatively low (see a reference sign A42). In these examples, it is assumed that the target acceleration at a time point t3 at which the accelerator operation amount becomes constant is equal.

As indicated by the solid lines in FIG. 13, according to the present embodiment, in the case where the vehicle speed during the period, in which the accelerator operation amount is constant, is high (see the reference sign A41), the relatively high target jerk (a negative value close to 0) is determined, and thus the relatively high target acceleration is determined. As a result, when the accelerator operation amount is constant during the acceleration, the reduction in the target acceleration is suppressed, and the sense of the increase in the acceleration is ensured. In the case where the vehicle speed during the period, in which the accelerator operation amount is constant, is high, the driver depresses the accelerator pedal (see a reference sign A51), and thus it can be said that the sense of the increase in the acceleration is required. Thus, according to the present embodiment, in the case where the vehicle speed during the period, in which the accelerator operation amount is constant, is high, it is assumed that the sense of the increase in the acceleration is required, and the reduction in the target acceleration is suppressed by using the relatively high target jerk. In this way, it is possible to improve the sense of the increase in the acceleration when the accelerator operation amount is constant.

Meanwhile, as indicated by the broken lines in FIG. 13, according to the present embodiment, in the case where the vehicle speed during the period, in which the accelerator operation amount is constant, is low (see the reference sign A42), the relatively low target jerk is determined, and thus the relatively low target acceleration is determined. As a result, when the accelerator operation amount is constant during the acceleration, the target acceleration is reduced relatively significantly, and the increase in the acceleration is suppressed. In the case where the vehicle speed during the period, in which the accelerator operation amount is constant, is low, the driver does not depress the accelerator pedal much (see a reference sign A52), and thus it can be said that the sense of the increase in the acceleration is not required much. Thus, according to the present embodiment, in the case where the vehicle speed during the period, in which the accelerator operation amount is constant, is low, it is assumed that the sense of the increase in the acceleration is not required, and thus the target acceleration is reduced by using the relatively low target jerk. In this way, it is possible to suppress the increase in the acceleration when the accelerator operation amount is constant.

As it has been described so far, according to the vehicle control system 1 in the present embodiment, the controller 20 determines the target acceleration basically on the basis of the accelerator operation amount and the vehicle speed. However, in the case where the accelerator operation amount is constant during the acceleration of the vehicle, it determines the target jerk on the basis of the target acceleration at the time point, at which the accelerator operation amount becomes constant, and the current vehicle speed instead of using such target acceleration, and determines the target acceleration to achieve the target jerk. In this way, it is possible to improve the sense of the increase in the acceleration during the period, in which the accelerator operation amount becomes constant during the acceleration, while ensuring the controllability of the acceleration with respect to the accelerator operation.

In particular, according to the present embodiment, in the case where the accelerator operation amount is constant during the acceleration of the vehicle, the controller 20 determines the target jerk having the higher value as the target acceleration at the time point, at which the accelerator operation amount becomes constant, is increased. As a result, in the case where the target acceleration at the time point, at which the accelerator operation amount becomes constant, is high, it is assumed that the driver has the clear intention to accelerate, and the reduction in the target acceleration can be suppressed by using the relatively high target jerk. Therefore, it is possible to effectively improve the sense of the increase in the acceleration when the accelerator operation amount is constant.

In addition, according to the present embodiment, in the case where the accelerator operation amount is constant during the acceleration of the vehicle, the controller 20 determines the target jerk having the higher value as the current vehicle speed is increased. As a result, in the case where the vehicle speed during the period, in which the accelerator operation amount is constant, is high, the driver depresses the accelerator pedal. Thus, it is assumed that the sense of the increase in the acceleration is required, and the reduction in the target acceleration can be suppressed by using the relatively high target jerk. Therefore, it is possible to effectively improve the sense of the increase in the acceleration when the accelerator operation amount is constant.

According to the present embodiment, the controller 20 determines the jerk having a negative value as the target jerk. As a result, in the case where the accelerator operation amount is constant during the acceleration of the vehicle, it is possible to control a magnitude of the reduction (a change rate at the time of the reduction) in the target acceleration by using the target jerk having a negative value.

According to the present embodiment, in the case where the accelerator operation amount is not constant during the acceleration of the vehicle, the controller 20 can determine such target acceleration that has the higher value as the accelerator operation amount is increased and has the lower value as the vehicle speed is increased. As a result, when the accelerator operation amount is changed, it is possible to determine the accurate target acceleration that corresponds to the accelerator operation amount and the vehicle speed.

According to the present embodiment, in the case where the accelerator operation amount is not constant during the acceleration of the vehicle, the controller 20 determines the target jerk on the basis of the accelerator operation amount change speed, and corrects the target acceleration on the basis of the target jerk. As a result, when the accelerator operation amount is changed, it is possible to smoothly change the target acceleration according to the accelerator operation amount change speed.

### [Reference Signs List]

- 1:: vehicle control system
- 2:: motor
- 3:: battery
- 12:: inverter
- 16:: accelerator operation amount sensor
- 18:: vehicle speed sensor
- 20:: controller

## Claims

1. A vehicle control system comprising:
a drive source (2) that generates a driving force of a vehicle;
an accelerator operation amount sensor (16) that detects an accelerator operation amount as an operation amount of an accelerator pedal of the vehicle;
a vehicle speed sensor (18) that detects a vehicle speed of the vehicle; and
a controller (20) that determines target acceleration at least on the basis of the accelerator operation amount and the vehicle speed, and controls the drive source (2) to generate the driving force that corresponds to the target acceleration,
**characterized in that**
the controller (20) is configured to:
determine, when the accelerator operation amount is constant during acceleration of the vehicle, a target jerk on the basis of the target acceleration or actual acceleration of the vehicle at a time point at which the accelerator operation amount has become constant, and/or on the basis of the current vehicle speed, and
determine the target acceleration to achieve the target jerk.

2. The vehicle control system according to claim 1, wherein the controller (20) is configured to:
determine the target jerk such that a value of the target jerk increases with an increase of the target acceleration or the actual acceleration at the time point at which the accelerator operation amount becomes constant.

3. The vehicle control system according to claim 1 or 2, wherein
the controller (20) is configured to:
determine the target jerk such that a value of the target jerk increases with an increase of the current vehicle speed.

4. The vehicle control system according to any one of the preceding claims,
wherein the controller (20) is configured to determine, during a period in which the accelerator operation amount is constant during the acceleration, the target jerk using a predefined target jerk map, the target jerk map providing a value for the target jerk as an output on the basis of the target acceleration or the actual acceleration at the time point at which the accelerator operation amount becomes constant and/or the current vehicle speed as an input.

5. The vehicle control system according to any one of the preceding claims, wherein
the controller (20) is configured to determine a jerk having a negative value as the target jerk.

6. The vehicle control system according to any one of claims 1 to 4, wherein
the controller (20) is configured to determine, when the accelerator operation amount is not constant during the acceleration of the vehicle, the target acceleration such that a value of the target acceleration increases with an increase of the accelerator operation amount and/or decreases with an increase of the vehicle speed.

7. The vehicle control system according to any one of claims, wherein
the controller (20) is configured to determine, when the accelerator operation amount is not constant during the acceleration of the vehicle, the target acceleration using a predefined target acceleration map, the predefined target acceleration map providing a value for the target acceleration as an output on the basis of the accelerator operation amount and/or the vehicle speed as an input.

8. The vehicle control system according to any one of the preceding claims, wherein
the controller (20) is configured to determine, when the accelerator operation amount is not constant during the acceleration of the vehicle, the target jerk on the basis of a change speed of the accelerator operation amount, and correct the target acceleration on the basis of the target jerk.

9. The vehicle control system according to claim 7 and 8, wherein the controller (20) is configured to correct a value of the target acceleration obtained via the predefined target acceleration map on the basis of the target jerk obtained on the basis of the change speed of the accelerator operation amount.

10. A method for operating a vehicle control system, in particular a vehicle control system according to any one of the preceding claims,
vehicle control system comprising:
a drive source (2) that generates a driving force of a vehicle;
an accelerator operation amount sensor (16) that detects an accelerator operation amount as an operation amount of an accelerator pedal of the vehicle;
a vehicle speed sensor (18) that detects a vehicle speed of the vehicle;
the method comprising
determining a target acceleration at least on the basis of the accelerator operation amount and the vehicle speed, and controlling the drive source (2) to generate the driving force that corresponds to the target acceleration, **characterized in that**
the method further comprises determining, when the accelerator operation amount is constant during acceleration of the vehicle, a target jerk on the basis of the target acceleration or actual acceleration of the vehicle at a time point at which the accelerator operation amount has become constant, and/or on the basis of the current vehicle speed, and
determining the target acceleration to achieve the target jerk.

11. The method according to claim 10,
the method comprising:
determining the target jerk such that a value of the target jerk increases with an increase of the target acceleration or the actual acceleration at the time point at which the accelerator operation amount becomes constant.

12. The method according to claim 10 or 11,
the method comprising:
determining the target jerk such that a value of the target jerk increases with an increase of the current vehicle speed.

13. The method according to any one of claims 10 to 12, the method comprising determining a jerk having a negative value as the target jerk.

14. The method according to any one of claims 10 to 13, the method comprising determining, when the accelerator operation amount is not constant during the acceleration of the vehicle, the target acceleration such that a value of the target acceleration increases with an increase of the accelerator operation amount and/or decreases with an increase of the vehicle speed.

15. A vehicle comprising a vehicle control system according to any one of the preceding claims.
